(19) Europäisches Patentamt
European Patent Office
Office européen des brevets

(11) **EP 3 733 398 A1**

(12) **EUROPEAN PATENT APPLICATION**
published in accordance with Art. 153(4) EPC

(43) Date of publication:
**04.11.2020 Bulletin 2020/45**

(51) Int Cl.:
**B32B 5/28** *(2006.01)*          **B29B 11/16** *(2006.01)*
**B29B 15/08** *(2006.01)*          **B29K 101/12** *(2006.01)*

(21) Application number: **18894805.3**

(22) Date of filing: **12.12.2018**

(86) International application number:
**PCT/JP2018/045650**

(87) International publication number:
**WO 2019/131125 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.12.2017 JP 2017249456**

(71) Applicant: **Toray Industries, Inc.**
**Tokyo, 103-8666 (JP)**

(72) Inventors:
• **SEIKE Satoshi**
**Nagoya-shi, Aichi 455-8502 (JP)**
• **TATEYAMA Masaru**
**Nagoya-shi, Aichi 455-8502 (JP)**
• **FUSE Mitsuki**
**Nagoya-shi, Aichi 455-8502 (JP)**

(74) Representative: **Hoefer & Partner Patentanwälte mbB**
**Pilgersheimer Straße 20**
**81543 München (DE)**

(54) **FIBER-REINFORCED THERMOPLASTIC RESIN MOLDING MATERIAL**

(57) A fiber-reinforced thermoplastic resin forming material which contains reinforcing fiber bundles in a thermoplastic resin, wherein a first component (I) and a second component (II) are laminated in such a manner that the first component (I) is arranged in the surface of the forming material. Provided is a fiber-reinforced thermoplastic resin forming material having excellent mechanical properties and excellent formability into a complicated shape. The first component (I): a sheet-like material having a heat conductivity ($\lambda$1) of 0.2 W/m·K or less; and the second component (II): a fiber-reinforced thermoplastic resin sheet-like material having a product (B2) of a density and a specific heat of $1.7 \times 10^6 J/m^3 \cdot K$ or more.

FIG. 1

Fiber-reinforced resin forming material

Component (I)

Component (II)

EP 3 733 398 A1

**Description**

Technical Field of the Invention

Our invention relates to a fiber-reinforced thermoplastic resin forming material excellent in mechanical properties and formability of complicated shapes.

Background Art of the Invention

Carbon fiber-reinforced plastics (CFRP), excellent in specific strength and specific rigidity, has actively been developed for automotive materials recently.

Such materials applied to automobiles include a prepreg and a material made of thermosetting resin used for airplanes and sport gears by resin transfer molding (RTM) or filament winding (FW). On the other hand, CFRP made from thermoplastic resin can be formed at high speed molding and excellent recycling efficiency, so that they are expected to be a material suitable for mass production. The press forming can form a complicated shape of a large area with resin at a high productivity, and is expected to take the place of metal forming processes.

The press forming is performed mostly with a sheet-shaped material made of discontinuous reinforcing fiber as an intermediate base material. The sheet-shaped materials typically include sheet molding compound (SMC) and glass mat thermoplastic (GMT) as disclosed in Patent documents 1 and 2. Both of these intermediate base materials, which are used for so-called "Flow Stamping Forming" to charge the die cavity with material flowing inside, comprise relatively long reinforcing fibers dispersed like chopped strand and/or swirl in the thermoplastic resin. Such materials comprising fiber bundles consisting of many single yarns may have poor mechanical properties of shaped product in spite of excellent fluidity during a forming process.

Patent document 3 discloses an intermediate base material for press forming made by alternately laminating thermoplastic resin components (I) and (II) comprising discontinuous reinforcing fibers dispersed like monofilaments. Patent document 4 discloses a reinforced stampable sheet for press forming made by laminating continuous glass fiber sheets and short glass fiber sheets comprising thermoplastic resin matrix. Both of them have a poor fluidity although being excellent in mechanical properties.

Patent document 5 discloses a forming material having a multi-layer structure consisting of sheets different in fiber length and density parameter. The mechanical properties are enhanced by using long fibers in the surface layer sheet while the fluidity is enhanced by using short fibers in the inner layer sheet. Patent document 6 discloses a forming material consisting of skin layer and core layer which have different mat structures. The mechanical properties and fluidity are enhanced by using less thermally conductive reinforcing fibers in the skin layer and carbon fibers in the core layer. Although the balance between mechanical properties and fluidity have been improved, they are demanded to improve further.

Prior art documents

Patent documents

Patent document 1: JP2000-141502-A
Patent document 2: JP2003-80519-A
Patent document 3: JP2014-28510-A
Patent document 4: JP-H6-47737-A
Patent document 5: JP-5985085-B
Patent document 6: JP-5843048-B

Summary of the Invention

Problems to be solved by the Invention

According to the above-described situation, it could be helpful to provide a fiber-reinforced thermoplastic resin forming material excellent in mechanical properties and fluidity during a forming process.

Means for solving the Problems

To solve the above-described problem, we invented a fiber-reinforced thermoplastic resin forming material. Our invention has the following configuration.

[1] A fiber-reinforced thermoplastic resin forming material which contains reinforcing fiber bundles in a thermoplastic resin, wherein a laminate of a first component (I) and a second component (II) has a surface layer of the first component (I), the first component (I) being a sheet having a thermal conductivity ($\lambda1$) of 0.2W/m·K or less, the second component (II) being a fiber-reinforced thermoplastic resin sheet having a product (B2) of a density and a specific heat of $1.7 \times 10^6 J/m^3 \cdot K$ or more.

[2] The fiber-reinforced thermoplastic resin forming material according to the preceding item, wherein the first component (I) has a void ratio of 5% or more.

[3] The fiber-reinforced thermoplastic resin forming material according to the preceding items, wherein the reinforcing fiber bundles have a cutting angle ($\theta$) of 3° or more and 30° or less.

[4] The fiber-reinforced thermoplastic resin forming material according to the preceding items, wherein the reinforcing fiber bundles have an aspect ratio (A2) of 10 or less in the second component (II).

[5] The fiber-reinforced thermoplastic resin forming material according to the preceding items, wherein the first component (I) has a fiber weight content (Wf1) of 20 wt% or more.

[6] The fiber-reinforced thermoplastic resin forming material according to the preceding items, wherein the second component (II) has a proportion of 50 to 95 vol% with respect to a total volume of the first component (I) and the second component (II).

[7] The fiber-reinforced thermoplastic resin forming material according to the preceding items, wherein the reinforcing fiber bundles have an average fiber length (Lf1) of 8 mm or more and 100 mm or less in the first component (I).

[8] The fiber-reinforced thermoplastic resin forming material according to the preceding items, wherein the reinforcing fiber bundles have an average fiber length (Lf2) of 3 mm or more and 20 mm or less in the second component (II).

[9] The fiber-reinforced thermoplastic resin forming material according to the preceding items, wherein the second component (II) has a fiber weight content (Wf2) of 50 wt% or less.

[10] The fiber-reinforced thermoplastic resin forming material according to the preceding items, wherein the reinforcing fiber bundles have an average fiber number (n2) of 500 or more in the second component (II).

[11] The fiber-reinforced thermoplastic resin forming material according to the preceding items, wherein the laminate of the first component (I) and the second component (II) has a laminate structure of [(I)/(II)$_m$/(I)], where m is a positive integer.

[12] The fiber-reinforced thermoplastic resin forming material according to the preceding items, wherein the reinforcing fiber bundle contained in the first component (I) or the second component (II) is made of a carbon fiber or a glass fiber.

[13] The fiber-reinforced thermoplastic resin forming material according to the preceding items, wherein the first component (I) and the second component (II) contain at least one of a group of resins including polypropylene resin, polyethylene resin, polycarbonate resin, polyamide resin, polyester resin, polyarylene sulfide resin, polyphenylene sulfide resin, polyether ketone, polyetheretherketone resin, polyether ketone ketone resin, polyether sulfone resin, polyimide resin, polyamide-imide resin, polyetherimide resin and polysulfone resin.

[14] The fiber-reinforced thermoplastic resin forming material according to the preceding items, wherein the laminate has a thickness of 1 mm or more.

Effect according to the Invention

Our invention can provide a fiber-reinforced thermoplastic resin forming material excellent in mechanical properties and formability of complicated shapes.

Brief explanation of the drawings

[Fig. 1] Fig. 1 is a schematic perspective view showing a laminate structure of our fiber-reinforced thermoplastic resin forming material.
[Fig. 2] Fig. 2 is a schematic perspective view showing another laminate structure of our fiber-reinforced thermoplastic resin forming material.
[Fig. 3] Fig. 3 is a schematic view for explaining a cutting angle of a reinforcing fiber bundle constituting our fiber-reinforced thermoplastic resin forming material.
[Fig. 4] Fig. 4 is a schematic view for explaining a cutting angle of another reinforcing fiber bundle constituting our fiber-reinforced thermoplastic resin forming material.

Embodiments for carrying out the Invention

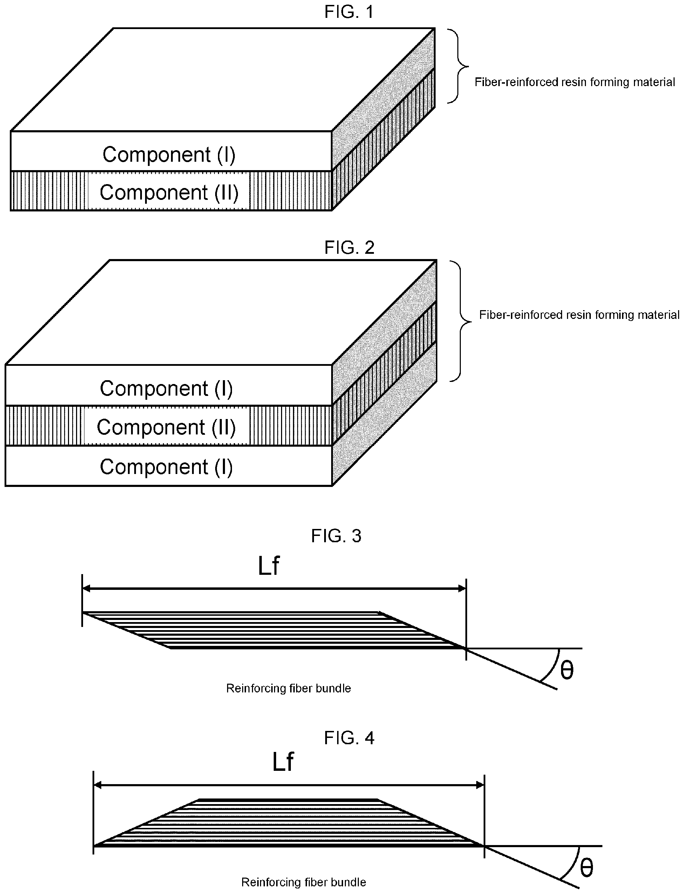

Our fiber-reinforced thermoplastic resin forming material is made by laminating component (I) and component (II) as shown in Fig. 1. Component (I) and components (II) may be or may not be integrated. Component (I) and component (II) comprise reinforcing fibers and thermoplastic resin.

Component (I) should exist on the surface of the laminate of component (I) and component (II). It is preferable that component (II) exists inside the laminate of which laminating order is shown as [component (I)/component (II)/component (I)]. The number of components constituting the laminate is not limited. It is preferable that the fiber-reinforced thermoplastic resin forming material includes component (II) of 50 vol% or more. It is preferable that the volume content is 60 vol% or more, further preferably 75 vol% or more. It is preferable that the volume content is 95 vol% or less. It is more preferably 90 vol% or less, further preferably 85 vol% or less.

It is preferable that component (I) has a thermal conductivity $\lambda1$ of 0.2W/m·K or less as a value determined according to JIS R1611 (Measurement methods of thermal diffusivity, specific heat capacity, and thermal conductivity for fine ceramics by flash method). It is preferable that it is 0.15W/m·K or less, further preferably 0.1W/m·K or less. The thermal conductivity within the range can enhance the fluidity of fiber-reinforced thermoplastic resin forming material. It is practicable that component (I) has a thermal conductivity of 0.01W/m·K or more.

It is preferable that component (I) has a void ratio of 5% or more. It is more preferable that it is 10% or more, further preferably 15% or more. The void ratio within the range can slow the cooling rate and enhance the fluidity of fiber-reinforced thermoplastic resin forming material. It is practicable that component (I) has a void ratio of 70% or less. The void ratio can be determined by a method to be described later.

It is preferable that component (II) has $1.7 \times 10^6$J/m$^3$·K or more of product B2 of density and specific heat, where the density is determined according to JIS K7222:2005 (Cellular plastics and rubbers - Determination of apparent (bulk) density) and the specific heat is determined according to JIS R1611 (Measurement methods of thermal diffusivity, specific heat capacity, and thermal conductivity for fine ceramics by flash method). It is more preferable that it is $2 \times 10^6$J/m$^3$·K or more, further preferably $2.5 \times 10^6$J/m$^3$·K or more. The product within the range can slow the cooling rate and enhance the fluidity of fiber-reinforced thermoplastic resin forming material. It is practicable that component (II) has $5 \times 10^6$J/m$^3$·K or less of the product of density and specific heat.

It is preferable that component (I) has fiber weight content Wf1 of 20 wt% or more. It is more preferable that it is 30 wt% or more, further preferably 40 wt% or more. The fiber weight content within the range can enhance the mechanical properties of fiber-reinforced thermoplastic resin forming material. It is practicable that component (I) has fiber weight content Wf1 of 80 wt% or less.

It is preferable that component (II) has fiber weight content Wf2 of 50 wt% or less. It is more preferable that it is 40 wt% or less, further preferably 30 wt% or less. The fiber weight content within the range can enhance the fluidity of fiber-reinforced thermoplastic resin forming material. It is practicable that component (II) has fiber weight content Wf2 of 5 wt% or more.

It is preferable that the fiber-reinforced thermoplastic resin forming material laminate of component (I) and component (II) has a thickness of 1 mm or more. It is more preferably 1.5 mm or more, further preferably 2 mm or more. The thickness within the range can enhance the mechanical properties and fluidity of fiber-reinforced thermoplastic resin forming material. It is practicable that the fiber-reinforced thermoplastic resin forming material has a thickness of 10 mm or less.

It is preferable that component (I) contains reinforcing fiber bundles (I) having average fiber number n1 of 5,000 or less. It is more preferably 1,000 or less, further preferably 500 or less. The average fiber number within the range can enhance the mechanical properties of fiber-reinforced thermoplastic resin forming material. It is practicable that reinforcing fiber bundles (I) have average fiber number n1 of 10 or more. The average fiber number can be determined by a method to be described later.

It is preferable that component (II) contains reinforcing fiber bundles (II) having average fiber number n2 of 500 or more. It is more preferably 1,000 or more, further preferably 5,000 or more. The average fiber number within the range can enhance the fluidity of fiber-reinforced thermoplastic resin forming material. It is practicable that reinforcing fiber bundles (II) have average fiber number n2 of 50,000 or less. It is preferable that the fiber bundle is preliminarily bundled. The said condition of "preliminarily bundled" may be a condition of fibers bundled by interlacing yarns constituting the fiber bundle, a condition of fibers bundled by adding a sizing agent to the fiber bundle, or a condition of fibers bundled by giving a twist in the fiber bundle production process.

It is preferable that component (I) contains reinforcing fiber bundles (I) having aspect ratio A1 of 2 or more, where the aspect ratio A1 (A1 = Lf1/D1) is defined as ratio A1 of average fiber length Lf1 [mm] and average fiber bundle width D1 [mm]. It is more preferable that aspect ratio A1 is 20 or more, further preferably 100 or more. The aspect ratio within the range can enhance the mechanical properties of fiber-reinforced thermoplastic resin forming material. It is practicable that reinforcing fiber bundles (I) have aspect ratio A1 of 200 or less. Average fiber length Lf1 [mm] and average fiber bundle width D1 [mm] can be determined by a method to be described later.

It is preferable that component (II) contains reinforcing fiber bundles (II) having aspect ratio A2 of 10 or less, where the aspect ratio A2 (A2 = Lf2/D2) is defined as ratio A2 of average fiber length Lf2 [mm] and average fiber bundle width D2 [mm]. It is more preferable that aspect ratio A2 is 7 or less, further preferably 3 or less. The aspect ratio within the range can enhance the fluidity of fiber-reinforced thermoplastic resin forming material. It is practicable that reinforcing fiber bundles (II) have aspect ratio A2 of 0.1 or more. Average fiber length Lf2 [mm] and average fiber bundle width D2 [mm] can be determined by a method to be described later.

It is preferable that component (I) contains reinforcing fiber bundles (I) having average fiber length Lf1 of 8 mm or more. It is more preferably 12mm or more, further preferably 15mm or more. It is preferable that reinforcing fibers (I) have average fiber length Lf1 of 100 mm or less. It is more preferably 75mm or less, further preferably 50mm or less. The average fiber length within the range can enhance the mechanical properties.

It is preferable that component (II) contains reinforcing fiber bundles (II) having average fiber length Lf2 of 3 mm or more. It is more preferably 5 mm or more, further preferably 7 mm or more. It is preferable that reinforcing fibers (II) have average fiber length Lf2 of 20 mm or less. It is more preferably 15mm or less, further preferably 10mm or less. The average fiber length within the range can enhance the mechanical properties and fluidity of fiber-reinforced thermoplastic resin forming material.

It is preferable that ratio Q is 1 or more, where the ratio Q (=Lf1/Lf2) defined as a ratio of (average fiber length Lf1 [mm])/(average fiber length Lf2 [mm]). It is more preferably 2 or more, further preferably 3 or more. It is preferable that Q is less than 20. It is more preferably less than 10, further preferably less than 5. The ratio within the range can enhance the mechanical properties and fluidity of fiber-reinforced thermoplastic resin forming material.

It is possible to add a sizing agent for purposes such as prevention of reinforcing fibers from fluffing, improvement of reinforcing fiber bundles in bundling and improvement of matrix resin in adhesiveness. The sizing agents include a compound having a functional group such as epoxy group, urethane group, amino group and carboxyl group. One or more kinds of them can be added together. Such a sizing agent may be added in a production process of partially-separated fiber bundle to be described later.

It is preferable that the fiber bundle is preliminarily bundled. The said condition of "preliminarily bundled" may be a condition of fibers bundled by interlacing yarns constituting the fiber bundle, a condition of fibers bundled by adding sizing agent to the fiber bundle, or a condition of fibers bundled by giving a twist in the fiber bundle production process.

It is preferable that the reinforcing fiber is made of carbon fiber, glass fiber, aramid fiber or metal fiber, although it is not limited thereto. Above all, it is preferably made of carbon fiber. From viewpoints of improvement of mechanical properties and lightweight of fiber-reinforced resin, it is preferable that the carbon fiber is based on polyacrylonitrile (PAN), pitch or rayon, although it is not limited in particular. It is possible that one or more kinds of the carbon fiber are used together. Above all, it is further preferable to use the PAN-based carbon fiber from a viewpoint of balance between strength and elastic modulus of fiber-reinforced resin obtained.

It is preferable that the reinforcing fibers have a single fiber diameter of 0.5 μm or more. It is more preferably 2 μm or more, further preferably 4 μm or more. Further, it is preferable that the reinforcing fibers have a single fiber diameter of 20 μm or less. It is more preferably 15 μm or less, further preferably 10 μm or less. It is preferable that the reinforcing fibers have a strand strength of 3.0 GPa or more. It is more preferably 4.0 GPa or more, further preferably 4.5 GPa or more. It is preferable that the reinforcing fibers have a strand elastic modulus of 200 GPa or more. It is preferably 220 GPa ore more, further preferably 240 GPa or more. The strength and elastic modulus of strand within the range can enhance the mechanical properties of fiber-reinforced thermoplastic resin forming material.

It is preferable that the reinforcing fiber bundle constituting a random mat has a cutting angle θ shown in Fig. 3 and Fig. 4 of 3° or more. It is more preferable that the cutting angle θ is 4° or more, further preferably 5° or more. The fiber bundles can stably be cut by the angle within the range. Further, it is preferable that the angle is 30° or less. It is more preferably 25° or less, further preferably 15° or less. The angle within the range can achieve both a good fluidity during the forming process and high mechanical properties of shaped product. Besides, cutting angle θ should be a value in the range from 0° to 90°.

It is preferable that the thermoplastic resin is polypropylene resin, polyethylene resin, polycarbonate resin, polyamide resin, polyester resin, polyarylene sulfide resin, polyphenylene sulfide resin, polyether ketone, polyetheretherketone resin, polyether ketone ketone resin, polyether sulfone resin, polyimide resin, polyamide-imide resin, polyetherimide resin, polysulfone resin, or a cyclic oligomer as a precursor thereof. It is possible to add an additive for the purpose of giving flexibility to resin.

[Examples]

Hereinafter, our invention will be explained in detail with reference to Examples. Measurement methods, calculation methods and evaluation methods are as follows.

<Measurement method of fiber volume contents Vf1,Vf2 of fiber-reinforced thermoplastic resin forming material>

A fiber-reinforced thermoplastic resin forming material is cut into a sample of approximately 2g to be subject to a measurement of mass Wc0. The sample is heated for an hour in an electric furnace under nitrogen atmosphere (oxygen concentration is under 1%) at 500°C to burn out organic substances such as matrix resin. After it is cooled down to room temperature, mass Wc1 of residual carbon fiber is measured to calculate the fiber volume contents by the following formula.

$$Vf1, Vf2 \text{ [vol\%]} = (Wc1/\rho f)/\{Wc1/\rho f + (Wc0 - Wc1)/\rho r\} \times 100$$

ρf: density [g/cm$^3$] of reinforcing fiber
ρr: density [g/cm$^3$] of thermoplastic resin

<Calculation method of void ratio>

The void ratio of sheet-shaped substance is calculated by the following formula from bulk density ρ0 (determined according to JIS K7222:2005 (Cellular plastics and rubbers - Determination of apparent (bulk) density)) and true density ρ1 (density of constitution material).

$$\text{Void ratio} = (1 - \rho0/\rho1) \times 100$$

ρ0: bulk density [g/cm$^3$]
ρ1: true density [g/cm$^3$] = {ρf × Vf1 + ρr × (100 - Vf1)}/100

<Measurement method of average fiber numbers n1,n2 per bundle of fiber-reinforced thermoplastic resin forming material>

The fiber-reinforced thermoplastic resin forming material is heated for an hour in an electric furnace under nitrogen atmosphere (oxygen concentration is under 1%) at 500°C to burn out organic substances such as matrix resin, and then the fiber mat is taken out. Forty fiber bundles are picked up from thus obtained fiber mat to measure weight Wf [mg] of each bundle to calculate average fiber numbers n1,n2 per bundle by the following formula.

$$n1, n2 = Wf/(\rho f \times \pi r^2 \times Lf) \times 10^6$$

ρf: density [g/cm$^3$] of reinforcing fiber
r: fiber diameter [μm]
Lf: average fiber length [mm]

<Measurement method of average fiber lengths Lf1,Lf2>

The fiber-reinforced thermoplastic resin forming material is heated for an hour in an electric furnace under nitrogen atmosphere (oxygen concentration is under 1%) at 500°C to burn out organic substances such as matrix resin, and then the fiber mat is taken out. Forty fiber bundles are picked up from thus obtained fiber mat to calculate average fiber lengths Lf1,Lf2 as average values of the longest fiber lengths in the longitudinal direction of a fiber bundle.

<Measurement method of average fiber bundle widths D1,D2>

The fiber-reinforced thermoplastic resin forming material is heated for an hour in an electric furnace under nitrogen atmosphere (oxygen concentration is under 1%) at 500°C to burn out organic substances such as matrix resin, and then the fiber mat is taken out. Forty fiber bundles are picked up from thus obtained fiber mat to calculate average fiber bundle widths D1,D2 as average values of the widest widths in the orthogonal direction of a fiber bundle.

<Measurement method and evaluation method of bending strength>

According to JIS K7074 (1988), the bending strength of fiber-reinforced thermoplastic resin forming material is measured. The bending strength is evaluated as: C for less than 200 MPa; B for 200 MPa or more and less than 350 MPa; and A for 350 MPa or more.

<Measurement method and evaluation method of rate of flow R of fiber-reinforced thermoplastic resin forming material>

Rate of flow R of fiber-reinforced thermoplastic resin forming material is determined according to the following procedure.

(1) A fiber-reinforced thermoplastic resin forming material is cut into a square size of 100mm $\times$ 100mm.
(2) The fiber-reinforced thermoplastic resin forming material preheated at a predetermined temperature with an IR heater until the resin is melted.
(3) It is placed on a press board heated to a predetermined temperature and is pressurized at 20 MPa for 30 sec.
(4) Surface area S2 [mm2] of obtained shaped product and surface area S1 [mm$^2$] of fiber-reinforced thermoplastic resin forming material before the pressing process are measured to calculate rate of flow R [%] by the formula of S2/S1 $\times$ 100. Rate of flow R is evaluated as: C for less than 200%; B for 200% or more and less than 300%; and A for 300% or more.

[Raw materials]

- Reinforcing fiber bundle 1 (carbon fiber)

Carbon fiber bundle ("PX35" made by ZOLTEK company, single yarn number of 50,000) is used.

- Reinforcing fiber bundle 2 (glass fiber)

Glass fiber bundle (240TEX made by Nitto Boseki Co., Ltd., single yarn number of 1,600) is used.

- Resin sheet 1 (Ny6)

Polyamide master batch made of polyamide 6 resin (made by Toray Industries, Inc., "Amilan" (registered trademark) CM1001) is used to prepare the sheet.

- Resin sheet 2 (PP)

Polypropylene master batch made of native polypropylene resin (made by Prime Polymer Co., Ltd., "Prime Polypro" (registered trademark) J106MG) of 90 mass% and acid-modified polypropylene resin (made by Mitsui Chemicals, Inc., "ADMER" (registered trademark) QE800) of 10 mass% is used to prepare the sheet.

[Production method of component]

The fiber bundle rolled out by a winder constantly at 10m/min is fed to a vibrational widening roller vibrating in the axial direction at 10Hz to widen the width, and then is fed to a 60 mm width regulation roller to make a widened fiber bundle having width of 60mm.

Thus obtained widened fiber bundle is fed to a fiber separation means provided with iron plates for fiber separation having a protrusive shape of 0.2mm thickness, 3mm width and 20mm height, the iron plates being set in parallel at regular intervals of 3.5mm along the reinforcing fiber bundle width. The fiber separation means is intermittently inserted in and extracted from the widened fiber bundle to make a partially-separated fiber bundle.

The fiber separation means is kept for 3 sec as inserted in the widened fiber bundle travelling constantly at 10m/min to generate a fiber separation section, and then is kept for 0.2 sec as extracted therefrom. Such an insertion/extraction process is repeated.

The partially-separated fiber bundle has fiber separation sections in which fiber bundles are separated with respect to the width direction to have a target average fiber number. At least one end of a fiber separation section has an accumulated interlacing section in which interlaced single yarns are accumulated. Next, the partially-separated fiber bundles are continuously inserted into a rotary cutter to cut the bundles into a target fiber length, and then are sprayed to be dispersed uniformly to make a discontinuous fiber nonwoven fabric having an isotropic fiber orientation.

The discontinuous fiber nonwoven fabric sandwiched vertically by resin sheets is impregnated with the resin by a pressing machine to produce a sheet of fiber-reinforced thermoplastic resin forming material.

(Reference example 1)

The above-described production method was performed to prepare a fiber-reinforced thermoplastic resin forming material component (fiber weight content of 49wt%, thermal conductivity of 0.07W/m·K, void ratio of 50%, thickness of 0.4mm) consisting of resin sheet 1 (Ny6) and discontinuous fiber nonwoven fabric which includes reinforcing fiber bundle 2 (glass fiber) having cutting angle of 10°, fiber length of 20mm and average fiber number of 1,000, as shown in Table 1.

(Reference example 2)

The above-described production method was performed to prepare a fiber-reinforced thermoplastic resin forming material component (fiber weight content of 40wt%, thermal conductivity of 0.1W/m·K, void ratio of 50%, thickness of 0.4mm) consisting of resin sheet 1 (Ny6) and discontinuous fiber nonwoven fabric which includes reinforcing fiber bundle 1 (carbon fiber) having cutting angle of 10°, fiber length of 20mm and average fiber number of 1,000, as shown in Table 1.

(Reference example 3)

The above-described production method was performed to prepare a fiber-reinforced thermoplastic resin forming material component (fiber weight content of 22wt%, thermal conductivity of 0.2W/m·K, void ratio of 30%, thickness of 0.3mm) consisting of resin sheet 1 (Ny6) and discontinuous fiber nonwoven fabric which includes reinforcing fiber bundle 1 (carbon fiber) having cutting angle of 50°, fiber length of 10mm and average fiber number of 1,000, as shown in Table 1.

(Rreference example 4)

The above-described production method was performed to prepare a fiber-reinforced thermoplastic resin forming material component (fiber weight content of 18wt%, thermal conductivity of 0.2W/m·K, void ratio of 30%, thickness of 0.3mm) consisting of resin sheet 2 (PP) and discontinuous fiber nonwoven fabric which includes reinforcing fiber bundle 1 (carbon fiber) having cutting angle of 30°, fiber length of 10mm and average fiber number of 1,000, as shown in Table 1.

(Reference example 5)

The above-described production method was performed to prepare a fiber-reinforced thermoplastic resin forming material component (fiber weight content of 26wt%, thermal conductivity of 0.2W/m·K, void ratio of 10%, thickness of 0.2mm) consisting of resin sheet 2 (PP) and discontinuous fiber nonwoven fabric which includes reinforcing fiber bundle 1 (carbon fiber) having cutting angle of 30°, fiber length of 5mm and average fiber number of 1,000, as shown in Table 1.

(Reference example 6)

The above-described production method was performed to prepare a fiber-reinforced thermoplastic resin forming material component (fiber weight content of 55wt%, thermal conductivity of 0.3W/m·K, void ratio of 1%, thickness of 0.2mm) consisting of resin sheet 2 (PP) and discontinuous fiber nonwoven fabric which includes reinforcing fiber bundle 2 (glass fiber) having cutting angle of 10°, fiber length of 20mm and average fiber number of 1,000, as shown in Table 1.

(Reference example 7)

The above-described production method was performed to prepare a fiber-reinforced thermoplastic resin forming material component (fiber weight content of 40wt%, thermal conductivity of 0.5W/m·K, void ratio of 1%, thickness of 0.2mm) consisting of resin sheet 1 (Ny6) and discontinuous fiber nonwoven fabric which includes reinforcing fiber bundle 1 (carbon fiber) having cutting angle of 10°, fiber length of 20mm and average fiber number of 1,000, as shown in Table 1.

(Reference example 8)

The above-described production method was performed to prepare a fiber-reinforced thermoplastic resin forming material component (fiber weight content of 49wt%, product of density and specific heat of $2 \times 10^6 J/m^3 \cdot K$, thickness of 2mm) consisting of resin sheet 1 (Ny6) and discontinuous fiber nonwoven fabric which includes reinforcing fiber bundle 2 (glass fiber) having cutting angle of 30°, fiber length of 10mm and average fiber number of 1,000, as shown in Table 2.

(Reference example 9)

The above-described production method was performed to prepare a fiber-reinforced thermoplastic resin forming material component (fiber weight content of 46wt%, product of density and specific heat of $2 \times 10^6 J/m^3 \cdot K$, thickness of 2mm) consisting of resin sheet 2 (PP) and discontinuous fiber nonwoven fabric which includes reinforcing fiber bundle 1 (carbon fiber) having cutting angle of 50°, fiber length of 10mm and average fiber number of 500, as shown in Table 2.

(Reference example 10)

The above-described production method was performed to prepare a fiber-reinforced thermoplastic resin forming material component (fiber weight content of 40wt%, product of density and specific heat of $1.9 \times 10^6 J/m^3 \cdot K$, thickness of 2mm) consisting of resin sheet 1 (Ny6) and discontinuous fiber nonwoven fabric which includes reinforcing fiber bundle 1 (carbon fiber) having cutting angle of 10°, fiber length of 8mm and average fiber number of 3,000, as shown in Table 2.

(Reference example 11)

The above-described production method was performed to prepare a fiber-reinforced thermoplastic resin forming material component (fiber weight content of 40wt%, product of density and specific heat of $1.9 \times 10^6 J/m^3 \cdot K$, thickness of 2mm) consisting of resin sheet 1 (Ny6) and discontinuous fiber nonwoven fabric which includes reinforcing fiber bundle 1 (carbon fiber) having cutting angle of 10°, fiber length of 2mm and average fiber number of 1,000, as shown in Table 2.

(Reference example 12)

The above-described production method was performed to prepare a fiber-reinforced thermoplastic resin forming material component (fiber weight content of 46wt%, product of density and specific heat of $1.8 \times 10^6 J/m^3 \cdot K$, thickness of 2mm) consisting of resin sheet 2 (PP) and discontinuous fiber nonwoven fabric which includes reinforcing fiber bundle 1 (carbon fiber) having cutting angle of 10°, fiber length of 30mm and average fiber number of 500, as shown in Table 2.

(Reference example 13)

The above-described production method was performed to prepare a fiber-reinforced thermoplastic resin forming material component (fiber weight content of 46wt%, product of density and specific heat of $1.8 \times 10^6 J/m^3 \cdot K$, thickness of 2mm) consisting of resin sheet 2 (PP) and discontinuous fiber nonwoven fabric which includes reinforcing fiber bundle 1 (carbon fiber) having cutting angle of 10°, fiber length of 10mm and average fiber number of 100, as shown in Table 2.

(Reference example 14)

The above-described production method was performed to prepare a fiber-reinforced thermoplastic resin forming material component (fiber weight content of 60wt%, product of density and specific heat of $1.5 \times 10^6 J/m^3 \cdot K$, thickness of 2mm) consisting of resin sheet 1 (Ny6) and discontinuous fiber nonwoven fabric which includes reinforcing fiber bundle 1 (carbon fiber) having cutting angle of 10°, fiber length of 10mm and average fiber number of 1,000, as shown in Table 2.

(Example 1)

Component (I) prepared in Reference example 1 and component (II) prepared in Reference example 8 were laminated to produce a fiber-reinforced thermoplastic resin forming material having laminate structure of [(I)/(II)/(II)/(I)] which may be expressed as [(I)/(II)$_2$/(I)] hereinafter. The fiber-reinforced thermoplastic resin forming material preheated at 280°C was formed with thickness of 4.4mm by a pressing machine. Table 3 shows the bending strength of shaped product and the rate of flow R of forming material.

(Example 2)

Component (I) prepared in Reference example 1 and component (II) prepared in Reference example 10 were laminated to produce a fiber-reinforced thermoplastic resin forming material having laminate structure of [(I)/(II)$_2$/(I)]. The fiber-reinforced thermoplastic resin forming material preheated at 280°C was formed with thickness of 4.4mm by a pressing machine. Table 3 shows the bending strength of shaped product and the rate of flow R of forming material.

(Example 3)

Component (I) prepared in Reference example 1 and component (II) prepared in Reference example 11 were laminated to produce a fiber-reinforced thermoplastic resin forming material having laminate structure of [(I)/(II)$_2$/(I)]. The fiber-reinforced thermoplastic resin forming material preheated at 280°C was formed with thickness of 4.4mm by a pressing machine. Table 3 shows the bending strength of shaped product and the rate of flow R of forming material.

(Example 4)

Component (I) prepared in Reference example 2 and component (II) prepared in Reference example 8 were laminated to produce a fiber-reinforced thermoplastic resin forming material having laminate structure of [(I)/(II)$_2$/(I)]. The fiber-reinforced thermoplastic resin forming material preheated at 280°C was formed with thickness of 4.4mm by a pressing machine. Table 3 shows the bending strength of shaped product and the rate of flow R of forming material.

(Example 5)

Component (I) prepared in Reference example 3 and component (II) prepared in Reference example 8 were laminated to produce a fiber-reinforced thermoplastic resin forming material having laminate structure of [(I)/(II)$_2$/(I)]. The fiber-reinforced thermoplastic resin forming material preheated at 280°C was formed with thickness of 4.4mm by a pressing machine. Table 3 shows the bending strength of shaped product and the rate of flow R of forming material.

(Example 6)

Component (I) prepared in Reference example 4 and component (II) prepared in Reference example 9 were laminated to produce a fiber-reinforced thermoplastic resin forming material having laminate structure of [(I)/(II)$_2$/(I)]. The fiber-reinforced thermoplastic resin forming material preheated at 230°C was formed with thickness of 4.4mm by a pressing machine. Table 3 shows the bending strength of shaped product and the rate of flow R of forming material.

(Example 7)

Component (I) prepared in Reference example 4 and component (II) prepared in Reference example 12 were laminated to produce a fiber-reinforced thermoplastic resin forming material having laminate structure of [(I)/(II)$_2$/(I)]. The fiber-reinforced thermoplastic resin forming material preheated at 230°C was formed with thickness of 4.4mm by a pressing machine. Table 3 shows the bending strength of shaped product and the rate of flow R of forming material.

(Example 8)

Component (I) prepared in Reference example 4 and component (II) prepared in Reference example 13 were laminated to produce a fiber-reinforced thermoplastic resin forming material having laminate structure of $[(I)/(II)_2/(I)]$. The fiber-reinforced thermoplastic resin forming material preheated at 230°C was formed with thickness of 4.4mm by a pressing machine. Table 3 shows the bending strength of shaped product and the rate of flow R of forming material.

(Example 9)

Component (I) prepared in Reference example 5 and component (II) prepared in Reference example 9 were laminated to produce a fiber-reinforced thermoplastic resin forming material having laminate structure of $[(I)/(II)_2/(I)]$. The fiber-reinforced thermoplastic resin forming material preheated at 230°C was formed with thickness of 4.4mm by a pressing machine. Table 3 shows the bending strength of shaped product and the rate of flow R of forming material.

(Comparative example 1)

Component (I) prepared in Reference example 6 and component (II) prepared in Reference example 9 were laminated to produce a fiber-reinforced thermoplastic resin forming material having laminate structure of $[(I)/(II)_2/(I)]$. The fiber-reinforced thermoplastic resin forming material preheated at 230°C was formed with thickness of 4.4mm by a pressing machine. Table 3 shows the bending strength of shaped product and the rate of flow R of forming material.

(Comparative example 2)

Component (I) prepared in Reference example 7 and component (II) prepared in Reference example 8 were laminated to produce a fiber-reinforced thermoplastic resin forming material having laminate structure of $[(I)/(II)_2/(I)]$. The fiber-reinforced thermoplastic resin forming material preheated at 280°C was formed with thickness of 4.4mm by a pressing machine. Table 3 shows the bending strength of shaped product and the rate of flow R of forming material.

(Comparative example 3)

Component (I) prepared in Reference example 1 and component (II) prepared in Reference example 14 were laminated to produce a fiber-reinforced thermoplastic resin forming material having laminate structure of $[(I)/(II)_2/(I)]$. The fiber-reinforced thermoplastic resin forming material preheated at 280°C was formed with thickness of 4.4mm by a pressing machine. Table 3 shows the bending strength of shaped product and the rate of flow R of forming material.

(Comparative example 4)

Component (I) prepared in Reference example 1 and component (II) prepared in Reference example 8 were laminated to produce a fiber-reinforced thermoplastic resin forming material having laminate structure of $[(I)/(II)_2/(I)]$. The fiber-reinforced thermoplastic resin forming material preheated at 280°C was formed with thickness of 4.4mm by a pressing machine. Table 3 shows the bending strength of shaped product and the rate of flow R of forming material.

(Comparative example 5)

Component (I) prepared in Reference example 1 was laminated to produce a fiber-reinforced thermoplastic resin forming material having laminate structure of $[(I)_{20}]$. The fiber-reinforced thermoplastic resin forming material preheated at 280°C was formed with thickness of 4mm by a pressing machine. Table 3 shows the bending strength of shaped product and the rate of flow R of forming material.

(Comparative example 6)

Component (II) prepared in Reference example 8 was laminated to produce a fiber-reinforced thermoplastic resin forming material having laminate structure of $[(II)_2]$. The fiber-reinforced thermoplastic resin forming material preheated at 280°C was formed with thickness of 4mm by a pressing machine. Table 3 shows the bending strength of shaped product and the rate of flow R of forming material.

[Table 1]

| | Reinforcing fiber bundle | Resin Sheet | Thermal conductivity λ1 | Void ratio | Cutting Angle θ | Fiber weight content before forming Wf1 | Fiber length Lf1 | Aspect ratio A1 | Average fiber number n1 |
|---|---|---|---|---|---|---|---|---|---|
| | | | W/m·K | % | ° | % | mm | | fibers |
| Reference example 1 | Glass fiber | Ny6 | 0.07 | 50 | 10 | 49 | 20 | 20 | 1,000 |
| Reference example 2 | Carbon fiber | Ny6 | 0.1 | 50 | 10 | 40 | 20 | 10 | 1,000 |
| Reference example 3 | Carbon fiber | Ny6 | 0.2 | 30 | 50 | 22 | 10 | 10 | 1,000 |
| Reference example 4 | Carbon fiber | PP | 0.2 | 30 | 30 | 18 | 10 | 5 | 1,000 |
| Reference example 5 | Carbon fiber | PP | 0.2 | 10 | 30 | 26 | 5 | 20 | 1,000 |
| Reference example 6 | Glass fiber | PP | 0.3 | 1 | 10 | 55 | 20 | 20 | 1,000 |
| Reference example 7 | Carbon fiber | Ny6 | 0.5 | 1 | 10 | 40 | 20 | 0 | 1,000 |

[Table 2]

| | Reinforcing fiber bundle | Resin Sheet | Product of density and specific heat B2 | Cutting Angle $\theta$ | Fiber weight content before forming Wf2 | Fiber length Lf2 | Aspect ratio A2 | Average fiber number n2 |
|---|---|---|---|---|---|---|---|---|
| | | | $10^6 J/m^3 \cdot K$ | ° | % | mm | | fibers |
| Reference example 8 | Glass fiber | Ny6 | 2 | 30 | 49.0 | 10 | 5 | 2,000 |
| Reference example 9 | Carbon fiber | PP | 2 | 50 | 46.0 | 10 | 20 | 500 |
| Reference example 10 | Carbon fiber | Ny6 | 1.9 | 10 | 40.0 | 8 | 3 | 3,000 |
| Reference example 11 | Carbon fiber | Ny6 | 1.9 | 10 | 40.0 | 2 | 2 | 1,000 |
| Reference example 12 | Carbon fiber | PP | 1.8 | 10 | 46.0 | 30 | 60 | 500 |
| Reference example 13 | Carbon fiber | PP | 1.8 | 10 | 46.0 | 10 | 100 | 100 |
| Reference example 14 | Carbon fiber | Ny6 | 1.5 | 10 | 60.0 | 10 | 10 | 1,000 |

[Table 3]

| | Component (I) | | | | | | Component (II) | | | | | | | | | Forming material | | | | Shaped product | |
|---|---|---|---|---|---|---|---|---|---|---|---|---|---|---|---|---|---|---|---|---|---|
| | Reinforcing fiber bundle | Resin | Thermal conductivity λ1 (W/m·K) | Void ratio (%) | Cutting angle θ (°) | Fiber length Lf1 (mm) | Reinforcing fiber bundle (Reference example) | Reinforcing fiber bundle | Resin | Product of density and specific heat R2 (10⁶ J/m³·K) | Cutting Angle θ (°) | Fiber weight content before forming Wf2 (%) | Fiber length Lf2 (mm) | Aspect ratio A2 | Average fiber number n2 (fibers) | Laminate structure | Proportion of component (II) (%) | Thickness (mm) | Average fiber length ratio Lf1/Lf2 | Rate of flow R | Bending strength |
| Example 1 | Glass fiber | Ny6 | 0.07 | 50 | 10 | 20 | Reference example 8 | Glass fiber | Ny6 | 2 | 30 | 49 | 10 | 5 | 2,000 | $[(I)/(II)_2/(I)]$ | 83 | 4.8 | 2.0 | A | B |
| Example 2 | Glass fiber | Ny6 | 0.07 | 50 | 10 | 20 | Reference example 10 | Carbon fiber | Ny6 | 1.9 | 10 | 40 | 8 | 3 | 3,000 | $[(I)/(II)_2/(I)]$ | 83 | 4.8 | 2.5 | A | A |
| Example 3 | Glass fiber | Ny6 | 0.07 | 50 | 10 | 20 | Reference example 11 | Carbon fiber | Ny6 | 1.9 | 10 | 40 | 2 | 2 | 1,000 | $[(I)/(II)_2/(I)]$ | 83 | 4.8 | 10.0 | A | A |
| Example 4 | Carbon fiber | Ny6 | 0.1 | 50 | 10 | 20 | Reference example 8 | Glass fiber | Ny6 | 2 | 30 | 49 | 10 | 5 | 2,000 | $[(I)/(II)_2/(I)]$ | 83 | 4.8 | 2.0 | A | B |
| Example 5 | Carbon fiber | Ny6 | 0.2 | 30 | 50 | 10 | Reference example 8 | Carbon fiber | Ny6 | 2 | 30 | 49 | 10 | 5 | 2,000 | $[(I)/(II)_2/(I)]$ | 88 | 4.6 | 1.0 | B | B |
| Example 6 | Carbon fiber | PP | 0.2 | 30 | 30 | 10 | Reference example 9 | Carbon fiber | PP | 2 | 50 | 46 | 10 | 20 | 500 | $[(I)/(II)_2/(I)]$ | 88 | 4.6 | 1.0 | B | B |
| Example 7 | Carbon fiber | PP | 0.2 | 30 | 30 | 10 | Reference example 12 | Carbon fiber | PP | 1.8 | 10 | 46 | 30 | 60 | 500 | $[(I)/(II)_2/(I)]$ | 88 | 4.6 | 0.3 | B | A |
| Example 8 | Carbon fiber | PP | 0.2 | 30 | 30 | 10 | Reference example 13 | Carbon fiber | PP | 1.8 | 10 | 46 | 10 | 100 | 100 | $[(I)/(II)_2/(I)]$ | 88 | 4.6 | 1.0 | B | A |
| Example 9 | Carbon fiber | PP | 0.3 | 10 | 30 | 5 | Reference example 9 | Carbon fiber | PP | 2 | 50 | 46 | 10 | 20 | 500 | $[(I)/(II)_2/(I)]$ | 90 | 4.4 | 0.5 | C | B |
| Comparative example 1 | Carbon fiber | Ny6 | 0.5 | 1 | 10 | 20 | Reference example 9 | Carbon fiber | Ny6 | 2 | 50 | 49 | 10 | 5 | 500 | $[(I)/(II)_2/(I)]$ | 91 | 4.4 | 2.0 | C | B |
| Comparative example 2 | Glass fiber | Ny6 | 0.07 | 1 | 10 | 20 | Reference example 8 | Glass fiber | Ny6 | 2 | 30 | 60 | 10 | 5 | 2,000 | $[(I)/(II)_2/(I)]$ | 91 | 4.4 | 2.0 | C | B |
| Comparative example 3 | Glass fiber | Ny6 | 0.07 | 50 | 10 | 20 | Reference example 14 | Carbon fiber | Ny6 | 1.5 | 10 | 49 | 10 | 10 | 1,000 | $[(I)/(II)_2/(I)]$ | 83 | 4.8 | 2.0 | C | A |
| Comparative example 4 | Glass fiber | Ny6 | 0.07 | 50 | 10 | 20 | Reference example 8 | Glass fiber | Ny6 | 2 | 30 | 49 | 10 | 5 | 2,000 | $[(I)/(II)_2/(I)]$ | 83 | 4.8 | 2 | C | C |
| Comparative example 5 | Glass fiber | Ny6 | 0.07 | 50 | 10 | 20 | | | | | | | | | | $[(I)_{20}]$ | 0 | 4.0 | / | A | C |
| Comparative example 6 | | | | | | | Reference example 8 | Glass fiber | Ny6 | 2 | 30 | 49 | 10 | 5 | 2,000 | $[(II)_2]$ | 100 | 4.0 | / | C | C |

Industrial Applications of the Invention

Our fiber-reinforced thermoplastic resin forming material is applicable to automotive interior/exterior, electric/electronic equipment housing, bicycle, airplane interior, box for transportation or the like.

Explanation of symbols

| | |
|---|---|
| $\lambda 1$: | thermal conductivity |
| B2: | product of density and specific heat |
| $\theta$: | cutting angle |
| A1,A2: | aspect ratio |
| Wf1,Wf2: | fiber weight content |
| Lf1,Lf2: | average fiber length |
| n1,n2: | average fiber number |
| D1,D2: | average fiber bundle width |
| Q: | ratio of Lf1 and Lf2 |
| Vf1,Vf2: | fiber volume content |

**Claims**

1. A fiber-reinforced thermoplastic resin forming material which contains reinforcing fiber bundles in a thermoplastic resin, wherein a laminate of a first component (I) and a second component (II) has a surface layer of the first component (I),
the first component (I) being a sheet having a thermal conductivity ($\lambda 1$) of 0.2W/m·K or less,
the second component (II) being a fiber-reinforced thermoplastic resin sheet having a product (B2) of a density and a specific heat of $1.7 \times 10^6 \text{J/m}^3\text{·K}$ or more.

2. The fiber-reinforced thermoplastic resin forming material according to claim 1, wherein the first component (I) has a void ratio of 5% or more.

3. The fiber-reinforced thermoplastic resin forming material according to claim 1 or 2, wherein the reinforcing fiber bundles have a cutting angle ($\theta$) of 3° or more and 30° or less.

4. The fiber-reinforced thermoplastic resin forming material according to any one of claims 1 to 3, wherein the reinforcing fiber bundles have an aspect ratio (A2) of 10 or less in the second component (II).

5. The fiber-reinforced thermoplastic resin forming material according to any one of claims 1 to 4, wherein the first component (I) has a fiber weight content (Wf1) of 20 wt% or more.

6. The fiber-reinforced thermoplastic resin forming material according to any one of claims 1 to 5, wherein the second component (II) has a proportion of 50 to 95 vol% with respect to a total volume of the first component (I) and the second component (II).

7. The fiber-reinforced thermoplastic resin forming material according to any one of claims 1 to 6, wherein the reinforcing fiber bundles have an average fiber length (Lf1) of 8 mm or more and 100 mm or less in the first component (I).

8. The fiber-reinforced thermoplastic resin forming material according to any one of claims 1 to 7, wherein the reinforcing fiber bundles have an average fiber length (Lf2) of 3 mm or more and 20 mm or less in the second component (II).

9. The fiber-reinforced thermoplastic resin forming material according to any one of claims 1 to 8, wherein the second component (II) has a fiber weight content (Wf2) of 50 wt% or less.

10. The fiber-reinforced thermoplastic resin forming material according to any one of claims 1 to 9, wherein the reinforcing fiber bundles have an average fiber number (n2) of 500 or more in the second component (II).

11. The fiber-reinforced thermoplastic resin forming material according to any one of claims 1 to 10, wherein the laminate of the first component (I) and the second component (II) has a laminate structure of [(I)/(II)$_m$/(I)], where m is a positive integer.

12. The fiber-reinforced thermoplastic resin forming material according to any one of claims 1 to 11, wherein the reinforcing fiber bundle contained in the first component (I) or the second component (II) is made of a carbon fiber or a glass fiber.

13. The fiber-reinforced thermoplastic resin forming material according to any one of claims 1 to 12, wherein the first component (I) and the second component (II) contain at least one of a group of resins including polypropylene resin, polyethylene resin, polycarbonate resin, polyamide resin, polyester resin, polyarylene sulfide resin, polyphenylene sulfide resin, polyether ketone, polyetheretherketone resin, polyether ketone ketone resin, polyether sulfone resin, polyimide resin, polyamide-imide resin, polyetherimide resin and polysulfone resin.

14. The fiber-reinforced thermoplastic resin forming material according to any one of claims 1 to 13, wherein the laminate has a thickness of 1 mm or more.

FIG. 1

Component (I)

Component (II)

Fiber-reinforced resin forming material

FIG. 2

Component (I)

Component (II)

Component (I)

Fiber-reinforced resin forming material

FIG. 3

Lf

Reinforcing fiber bundle

θ

FIG. 4

Lf

Reinforcing fiber bundle

θ

<div style="text-align:center">**INTERNATIONAL SEARCH REPORT**</div>

| International application No. |
|---|
| PCT/JP2018/045650 |

A. CLASSIFICATION OF SUBJECT MATTER
Int.Cl. B32B5/28(2006.01)i, B29B11/16(2006.01)i, B29B15/08(2006.01)i,
       B29K101/12(2006.01)n

According to International Patent Classification (IPC) or to both national classification and IPC

B. FIELDS SEARCHED

Minimum documentation searched (classification system followed by classification symbols)
Int.Cl. B32B1/00-43/00, B29B11/16;15/08-15/14, C08J5/04-5/10;5/24,
       B29C70/00-70/88, B29C43/00-43/58, B29K101/12

Documentation searched other than minimum documentation to the extent that such documents are included in the fields searched
Published examined utility model applications of Japan        1922-1996
Published unexamined utility model applications of Japan      1971-2019
Registered utility model specifications of Japan             1996-2019
Published registered utility model applications of Japan      1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2017-205878 A (TORAY INDUSTRIES, INC.) 24 November 2017, entire text (Family: none) | 1-14 |
| A | WO 2015/108021 A1 (TORAY INDUSTRIES, INC.) 23 July 2015, entire text & US 2016/0339669 A1 & EP 3095807 A1 & CN 105916918 A & KR 10-2016-0111401 A | 1-14 |
| A | JP 2016-203407 A (PRESS KOGYO CO., LTD.) 08 December 2016, entire text (Family: none) | 1-14 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 March 2019 (04.03.2019) | 12 March 2019 (12.03.2019) |

| Name and mailing address of the ISA/ Japan Patent Office 3-4-3, Kasumigaseki, Chiyoda-ku, Tokyo 100-8915, Japan | Authorized officer Telephone No. |
|---|---|

Form PCT/ISA/210 (second sheet) (January 2015)

**INTERNATIONAL SEARCH REPORT**

International application No.

PCT/JP2018/045650

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2009-274412 A (TORAY INDUSTRIES, INC.) 26 November 2009, entire text (Family: none) | 1-14 |
| A | JP 7-156172 A (NICHIAS CORP.) 20 June 1995, entire text (Family: none) | 1-14 |
| A | WO 2016/178427 A1 (OKAYAMA UNIVERSITY) 10 November 2016, entire text (Family: none) | 1-14 |
| A | WO 2015/083820 A1 (MITSUBISHI RAYON CO., LTD.) 11 June 2015, entire text & US 2017/0157889 A1 & EP 3078485 A1 & KR 10-2016-0077160 A & CN 105873754 A & KR 10-2018-0127543 A | 1-14 |

Form PCT/ISA/210 (continuation of second sheet) (January 2015)

**EP 3 733 398 A1**

## REFERENCES CITED IN THE DESCRIPTION

### Patent documents cited in the description

- JP 2000141502 A
- JP 2003080519 A
- JP 2014028510 A
- JP H647737 A
- JP 5985085 B
- JP 5843048 B